# EUROPÄISCHE PATENTSCHRIFT

(11) **EP 3 548 321 B1**
(45) Veröffentlichungstag und Bekanntmachung des Hinweises auf die Patenterteilung: **27.05.2020**
(21) Anmeldenummer: 18759059.1
(22) Anmeldetag: 13.08.2018
(51) Int. Cl.: B60J 10/70, B60J 10/18

(54) **PROFILLEISTENANORDNUNG**
PROFILED STRIP ARRANGEMENT
AGENCEMENT DE BAGUETTES PROFILÉES

(30) Priorität: 16.08.2017 DE 102017118663
(43) Veröffentlichungstag der Anmeldung: 09.10.2019
(73) Patentinhaber: Elkamet Kunststofftechnik GmbH, 35216 Biedenkopf (DE)
(72) Erfinder: ORTMUELLER, Michael, 35232 Dautphetal-Herzhausen (DE); LANDECK, David, 35037 Marburg (DE)
(74) Vertreter: DREISS Patentanwälte PartG mbB
(86) Internationale Anmeldenummer: PCT/EP2018/071864
(87) Internationale Veröffentlichungsnummer: WO 2019/034578

(56) Entgegenhaltungen:
- WO-A1-2016/189238
- DE-A1-102004 030 465
- DE-A1-102009 010 015

## Beschreibung

Die Erfindung betrifft eine Profilleistenanordnung, umfassend eine Profilleiste mit einem ersten Verbindungsbereich zur Verbindung mit einem Randbereich einer Windschutzscheibe eines Kraftfahrzeugs und mit einem zweiten Verbindungsbereich zur Verbindung mit einer an die Windschutzscheibe angrenzenden Wasserkastenabdeckung, wobei der erste Verbindungsbereich einen Verbindungsabschnitt zur Verbindung mit einer Innenseite der Windschutzscheibe aufweist und wobei der zweite Verbindungsbereich einen V- oder U-förmigen Materialabschnitt zur Begrenzung eines nutförmigen Aufnahmebereichs aufweist, wobei der Aufnahmebereich zur verrastenden Aufnahme eines Rastabschnitts der Wasserkastenabdeckung ausgebildet ist, wobei die Außenseiten der Wasserkastenabdeckung, der Profilleiste und der Windschutzscheibe miteinander bündig sind.

Aus dem Stand der Technik, beispielsweise aus der DE 200 08 555 U1 und der WO 2006/002891 A2, bekannte Profilleistenanordnungen dienen dazu, einen unteren Randbereich einer Windschutzscheibe eines Kraftfahrzeugs mit einer sogenannten Wasserkastenabdeckung zu verbinden. Diese wird üblicherweise mit einem Verbindungsbereich der Profilleiste verrastet, indem ein Rastabschnitt in Form eines Befestigungsstegs der Wasserkastenabdeckung in einen Aufnahmebereich des Verbindungsbereichs der Profilleiste eingeführt und dort verrastet wird.

Eine Wasserkastenabdeckung dient zur Abdeckung eines Wasserkastens, der von der Fahrzeugscheibe abfließendes Wasser aufnimmt und kontrolliert in den Motorraum und unter das Fahrzeug ableitet. Der Wasserkasten kann Bestandteil der Fahrzeugkarosserie sein. Die aus der DE 200 08 555 U1 und der WO 2006/002891 A2 bekannten Profilleistenanordnungen ermöglichen einen im Bereich der unteren Berandung der Windschutzscheibe flächigen und aerodynamisch günstigen Übergang zu der angrenzenden Wasserkastenabdeckung.

Die Profilleiste wird nach ihrer Herstellung mit dem Randbereich der Windschutzscheibe verbunden, üblicherweise verklebt. Dieser Montageschritt wird üblicherweise bei Zulieferern durchgeführt, sodass die Zulieferer einem Kraftfahrzeughersteller eine Baugruppe liefern können, welche die Windschutzscheibe und die mit der Windschutzscheibe verbundene Profilleiste umfasst. Diese Baugruppe wird dann im Rahmen einer Endmontage eines Kraftfahrzeugs mit einer Windschutzscheibenaufnahme einer Kraftfahrzeugkarosserie verbunden (üblicherweise verklebt); außerdem wird die angrenzende Wasserkastenabdeckung mit der Profilleiste gefügt.

Während des Transports der vorstehend genannten Baugruppe von dem Zulieferer zu dem Kraftfahrzeughersteller steht der zur Verbindung mit der Wasserkastenabdeckung vorgesehene ("zweite") Verbindungsbereich der Profilleiste von der Windschutzscheibe ab und ist somit mechanischen Einflüssen ausgesetzt. Gleichzeitig ist es aber erwünscht, dass die Baugruppe platzsparend und "stehend" transportiert werden kann, dass also die Windschutzscheibe hochkant transportiert werden kann. Außerdem ist es erwünscht, dass die Windschutzscheibe während des Transports gegen eine Beschädigung des unteren Randbereichs geschützt ist. Ein solcher Schutz ist dadurch gewährleistet, dass sich die Windschutzscheibe während ihres Transports auf dem zweiten Verbindungsbereich der Profilleiste abstützt. Dies bedeutet aber, dass das Gewicht der Windschutzscheibe während des Transports der Baugruppe auf dem zweiten Verbindungsbereich der Profilleiste lastet. Diese Belastung bewirkt eine unerwünschte Verformung des den Aufnahmebereich begrenzenden zweiten Verbindungsbereichs der Profilleiste. Hierbei hat sich herausgestellt, dass Profilleistenanordnungen mit außenseitig flächigen/bündigen Außenseiten besonders empfindlich sind, da ein die Oberseite der Berandung der Windschutzscheibe umgreifender Abschnitt fehlt (vgl. DE 37 02 555 A1).

Zur Vermeidung einer Verformung einer mit einer Windschutzscheibe verbundenen Profilleiste ist es aus dem Stand der Technik (beispielsweise aus der WO 2006/002891 A2, der EP 2 253 556 A1 und der WO 2014/041279 A1) bekannt, den zweiten Verbindungsbereich der Profilleiste dadurch zu versteifen, dass eine Transportschutzleiste (auch "Keder" genannt) verwendet wird, die mit zumindest einem Teilbereich ihres Querschnitts in dem Aufnahmebereich des zweiten Verbindungsbereichs angeordnet wird.

Nach Anlieferung der Baugruppe "Windschutzscheibe und Profilleiste" bei dem Kraftfahrzeughersteller wird die Transportschutzleiste wieder aus dem Aufnahmebereich der Profilleiste entfernt, damit der zweite Verbindungsbereich mit der Wasserkastenabdeckung verbunden werden kann. Die Transportschutzleiste wird anschließend entsorgt.

Zur Entfernung der Transportschutzleiste aus dem Aufnahmebereich des zweiten Verbindungsbereichs der Profilleiste schlägt die EP 2 253 556 A1 vor, an der Transportschutzleiste einen zusätzlichen Handhabungsabschnitt in Form einer Grifflasche vorzusehen, sodass die Transportschutzleiste durch manuelles Ziehen an der Grifflasche aus dem Aufnahmebereich der Profilleiste herausgezogen werden kann. Ein ähnlicher Handhabungsabschnitt in Form eines Ausziehrings ist aus der WO 2014/041279 A1 bekannt.

Die vorstehend genannten, zusätzlichen Handhabungsabschnitte vereinfachen die Entfernung der Transportschutzleiste aus dem Aufnahmebereich der Profilleiste. Die Transportschutzleiste und die Handhabungsabschnitte müssen aber zunächst als Einzelteile hergestellt werden und dann vom Zulieferer an der Profilleiste montiert werden. Nach dem Transport der Baugruppe zu dem Kraftfahrzeughersteller muss der Kraftfahrzeughersteller die Transportschutzleiste und die Handhabungsabschnitte dann wieder demontieren. Schließlich müssen die Transportschutzleiste und die Handhabungsabschnitte gesammelt und entsorgt werden.

Aus der DE 10 2009 010 015 A1, der WO 2016/189238 A1 und der DE 10 2004 030 465 A1 sind weitere Profilleistenanordnungen bekannt.

Hiervon ausgehend liegt der vorliegenden Erfindung die Aufgabe zugrunde, eine Profilleistenanordnung anzugeben, mit welcher der im Zusammenhang mit der Herstellung, dem Transport und der Montage einer Profilleistenanordnung entstehende Aufwand reduziert werden kann.

Diese Aufgabe wird bei einer Profilleistenanordnung mit den Merkmalen des Oberbegriffs des Patentanspruchs 1 erfindungsgemäß durch die kennzeichnenden Merkmale des Patentanspruchs 1 gelöst.

Bei der erfindungsgemäßen Profilleistenanordnung ist eine Profilleiste mit einem Basisabschnitt vorgesehen. Dieser Basisabschnitt wird durch zumindest eine Teilschicht des Verbindungsabschnitts des ersten Verbindungsbereichs und durch zumindest eine Teilschicht des Bodenabschnitts des V- oder U-förmigen Materialabschnitts gemeinsam gebildet. Dieser Basisabschnitt ist durchgängig, sodass entlang des Querschnitts des Basisabschnitts Kräfte übertragen werden können. Diese Kräfte können insbesondere während des Transports einer Baugruppe, die eine Windschutzscheibe und eine daran befestige Profilleiste umfasst, in den Bodenabschnitt der Profilleiste eingeleitet und in den Verbindungsabschnitt des ersten Verbindungsbereichs übertragen werden. Dadurch, dass die beiden Schenkel des V- oder U-förmigen Materialabschnitts von dem Basisabschnitt abragen, wird erreicht, dass bei einem stehenden Transport der vorstehend genannten Baugruppe durch das Gewicht der Windschutzscheibe bedingte Druckkräfte nicht in den äußeren Schenkel des V- oder U-förmigen Materialabschnitts eingeleitet werden. Dieser exponierte, äußere Schenkel kann also während des Transports von einem Kraftfluss entkoppelt werden. Die Durchgängigkeit des Basisabschnitts ermöglicht es, dass in den Bodenabschnitt des V- oder U-förmigen Materialabschnitts eingeleitete Kräfte entlang der Erstreckung des Basisabschnitts in den Verbindungsabschnitt übertragen werden, ohne dass die Gefahr eines Abknickens des Bodenabschnitts relativ zu dem Verbindungsabschnitt besteht.

Die erfindungsgemäße Profilleistenanordnung ermöglicht es, während des Transports einer Baugruppe (Windschutzscheibe und Profilleiste) auf die Anordnung eines Keders in dem Aufnahmebereich des zweiten Verbindungsbereichs zu verzichten. Dies bedeutet, dass der Keder weder bereitgestellt, noch mit dem Aufnahmebereich gefügt, noch wieder aus dem Aufnahmebereich entfernt, noch anschließend entsorgt werden muss.

Hierdurch vereinfachen sich die Herstellung und der Transport sowie die Montage einer Profilleistenanordnung.

Der Basisabschnitt kann sich in einer leicht gekrümmten Ebene erstrecken, vorzugsweise jedoch in einer geraden Ebene, sodass stirnseitig in den Basisabschnitt eingeleitete Druckkräfte möglichst querkraftfrei entlang der Erstreckung des Basisabschnitts übertragen werden können.

Eine weitere Maßnahme zur Erhöhung der Stabilität des Basisabschnitts besteht darin, dass der Bodenabschnitt und der Verbindungsabschnitt an ihrer jeweiligen Unterseite und/oder ihrer jeweiligen Oberseite stufenlos ineinander übergehen. Dies ermöglicht eine bestmögliche Nutzung des für den Basisabschnitt benötigten Materialvolumens. Ferner kann ein in dem Bereich des Übergangs zwischen einer Wasserkastenabdeckung und der unteren Berandung einer Windschutzscheibe üblicherweise begrenzter Bauraum bestmöglich genutzt werden. Schließlich schaffen die kontinuierlichen Übergänge an der Unterseite und/oder der Oberseite zwischen dem Bodenabschnitt und dem Verbindungsabschnitt einen bestmöglichen Schutz gegen ein Abknicken des Bodenabschnitts relativ zu dem Verbindungsabschnitt.

Für den besonders bevorzugten Fall, dass der Bodenabschnitt und der Verbindungsabschnitt sowohl an ihrer jeweiligen Unterseite als auch an ihrer jeweiligen Oberseite stufenlos ineinander übergehen, ist das gesamte Materialvolumen des Basisabschnitts für eine Kraftübertragung nutzbar. In diesem Fall bilden der Verbindungsabschnitt und der Bodenabschnitt gemeinsam mit ihrer jeweiligen, vollständigen Schichtstärke/Dicke (also nicht nur mit ggf. vorgesehenen Teilschichten) den Basisabschnitt.

Bei dem Basisabschnitt handelt es sich insbesondere um einen Flachkörperabschnitt. Die Dicke eines solchen Flachkörperabschnitts beträgt vorzugsweise mindestens einen Millimeter. Vorzugsweise beträgt diese Dicke höchstens fünf Millimeter. Besonders bevorzugt ist es ferner, wenn die Dicke entlang der Erstreckung des Flachkörperabschnitts (im Querschnitt gesehen) identisch ist.

Besonders vorteilhaft ist es ferner, wenn die Profilleiste längs ihrer Erstreckung mit mindestens einer Versteifungseinlage versteift ist. Hierbei kann es sich insbesondere um eine metallische Versteifungseinlage aus Aluminium oder Stahl handeln.

Besonders bevorzugt ist es, wenn sich die mindestens eine Versteifungseinlage im Querschnitt der Profilleiste gesehen zumindest mit einem Teilabschnitt innerhalb einer vorzugsweise geraden Ebene erstreckt, wobei ein erster Bereich des Teilabschnitts zumindest abschnittsweise in dem Verbindungsabschnitt angeordnet ist und ein zweiter Bereich desselben Teilabschnitts in dem Bodenabschnitt angeordnet ist. Auf diese Weise kann insbesondere ein Übergangsbereich zwischen dem Bodenabschnitt und dem Verbindungsabschnitt verstärkt werden.

Eine weiter optimierte Anordnung ergibt sich, wenn die Versteifungseinlage sich längs des gesamten Verbindungsabschnitts oder längs des gesamten Bodenabschnitts und besonders bevorzugt sowohl längs des gesamten Verbindungsabschnitts als auch längs des gesamten Bodenabschnitts erstreckt. Damit ist gemeint, dass mindestens 90% der Länge eines genannten Abschnitts (Verbindungsabschnitt bzw. Bodenabschnitt) mittels der Versteifungseinlage versteift sein sollen. Es ist also möglich, dass das Material der Profilleiste (üblicherweise ein elastisches Kunststoffmaterial) die Versteifungseinlage stirnseitig umschließt (mit maximal 10% der Länge des jeweiligen Abschnitts), damit die Versteifungseinlage vor Witterungseinflüssen und mechanischen Einwirkungen geschützt ist.

Ferner ist es bevorzugt, wenn eine Versteifungseinlage vorgesehen ist, die mindestens einen Teilabschnitt zur Versteifung eines Schenkels des V- oder U-förmigen Materialabschnitts aufweist. Bei einer solchen Versteifungseinlage kann es sich um eine Versteifungseinlage handeln, welche ausschließlich einen oder beide Schenkel des V- oder U-förmigen Materialabschnitts verstärkt. Vorzugsweise handelt es sich jedoch um den Abschnitt einer Versteifungseinlage, welche auch den Basisabschnitt zumindest abschnittsweise verstärkt.

Eine zum Schutz vor Transportschäden ohne Verwendung eines Keders besonders gut geeignete Anordnung ergibt sich, dadurch, dass die Profilleiste einen als Abstützkörper wirksamen Materialvorsprung aufweist, der benachbart zu einem Schenkel des V- oder U-förmigen Materialabschnitts angeordnet ist, der bezogen auf den Bodenabschnitt auf der dem Verbindungsabschnitt abgewandten Seite angeordnet ist.

Ein solcher Abstützköper schafft einen Materialbereich, auf welchen die Profilleiste bei einem Transport einer Windschutzscheibe aufgestellt werden kann. Der Abstützkörper bietet einen mechanischen Schutz der übrigen Bereiche der Profilleiste und kann daher hinsichtlich seiner Geometrie im Hinblick auf diese Abstützfunktion optimiert werden.

Eine besonders bevorzugte Querschnittsgeometrie des Materialvorsprungs ist eine Noppenform, also ein teilkreisförmiger Querschnitt, der es auch bei einer unebenen Aufstandsfläche ermöglicht, gewichtsbedingte Aufstandskräfte in den Materialvorsprung und von diesem in die Profilleiste einzuleiten.

Erfindungsgemäß ist der Materialvorsprung auf Höhe des Basisabschnitts angeordnet. Dies ermöglicht es, eine bei einem Transport durch die Windschutzscheibe gewichtsbedingte Aufstandskraft in den Materialvorsprung und von dort umwegfrei und unmittelbar in den Basisabschnitt einzuleiten.

Es ist besonders bevorzugt, dass der Materialvorsprung integraler Bestandteil des Basisabschnitts ist, sodass in den Materialvorsprung eingeleitete Kräfte verlustfrei in andere Bereiche des Basisabschnitts weitergeleitet werden können.

Es ist ferner bevorzugt, dass der Materialvorsprung und der Basisabschnitt aus demselben Material bestehen, wodurch die integrale Herstellung des Basisabschnitts und des Materialvorsprungs (vorzugsweise im Wege der Extrusion) vereinfacht wird.

Bei einer weiteren vorteilhaften Ausführungsform ist vorgesehen, dass der Materialvorsprung mittels mindestens einer Versteifungseinlage der Profilleiste versteift ist. Hierbei kann es sich insbesondere um eine Versteifungseinlage handeln, welche den Basisabschnitt zumindest bereichsweise verstärkt. Insbesondere erstrecken sich der Basisabschnitt mit dem daran integral ausgebildeten Materialvorsprung und die Versteifungseinlage in derselben, vorzugsweise in einer geraden Ebene.

Bei einer weiteren Ausführungsform der Erfindung ist vorgesehen, dass die Profilleiste einen zentralen Abschnitt aufweist, der an einen Schenkel des V- oder U-förmigen Materialabschnitts angrenzt oder diesen ausbildet und im Einbauzustand zu einer Berandung der Windschutzscheibe näher benachbart ist als der andere, äußere Schenkel des V- oder U-förmigen Materialabschnitts, wobei der zentrale Abschnitt von dem Basisabschnitt abragt. Ein solcher zentraler Abschnitt ermöglicht es beispielsweise, einen zu einer Berandung der Windschutzscheibe unmittelbar benachbarten Materialabschnitt der Profilleiste bereitzustellen. Ein solcher Abschnitt kann auch dazu dienen, in den Basisabschnitt eingeleitete Kräfte über den zentralen Abschnitt in eine seitliche Berandung einer Windschutzscheibe zu übertragen.

Insbesondere wenn der zentrale Abschnitt einen inneren Schenkel des V- oder U-förmigen Materialabschnitts ausbildet und/oder wenn der zentrale Abschnitt zur vorstehend beschriebenen Ableitung von Kräften dienen soll, ist es bevorzugt, wenn der zentrale Abschnitt im Querschnitt dicker ist als der äußere Schenkel des V- oder U-förmigen Materialabschnitts. Auf diese Weise geht die erhöhte Stabilität nicht zu Lasten der Verformbarkeit des äußeren Schenkels des V- oder U-förmigen Materialabschnitts, welche üblicherweise dazu benötigt oder erwünscht ist, dass der Rastabschnitt der Wasserkastenabdeckung unter Verformung des äußeren Schenkels in den Aufnahmebereich des zweiten Verbindungsbereichs eingeführt werden kann.

Eine weitere Möglichkeit zur Nutzung des zentralen Abschnitts besteht darin, dass dieser ein Dichtelement zur außenseitigen Abdichtung zwischen zueinander benachbarten Berandungen der Windschutzscheibe und der Wasserkastenabdeckung trägt. Dieses Dichtelement ist an seiner Oberseite vorzugsweise eben, um einen insgesamt bündigen Oberflächenübergang zu den Außenseiten der Windschutzscheibe und der Wasserkastenabdeckung zu schaffen. Dabei handelt es sich im Rahmen der vorliegenden Erfindung nicht um eine mathematisch perfekte Bündigkeit, sondern um eine Bündigkeit, welche im Rahmen der gegebenen Fertigungsmöglichkeiten in der Großserienfertigung darstellbar ist.

Die erfindungsgemäße, sehr stabile Ausführung der Profilleiste ermöglicht es insbesondere, dass der zentrale Abschnitt und/oder der äußere Schenkel des V- oder U-förmigen Materialabschnitts ein Rastelement aufweisen kann, das in den Aufnahmebereich hineinragt und zur Verrastung mit dem Rastabschnitt der Wasserkastenabdeckung dient. Bei dem Rastelement kann es sich um eine vergleichsweise kleine Rastlippe handeln, welche aus einem weicheren Material als das übrige Material der Profilleiste bestehen kann. Diese Anordnung ermöglicht eine besonders komfortable und zuverlässige Verrastung mit dem Rastabschnitt der Wasserkastenabdeckung, wie es beispielsweise in der DE 20 2008 006 986 U1 derselben Anmelderin beschrieben ist.
Das vorstehend genannte Rastelement kann insbesondere durch einen Fortsatz einer Weichmaterialschicht gebildet sein, die den zentralen Abschnitt in einen bodenseitigen Materialabschnitt und einen dichtelementseitigen Materialabschnitt unterteilt.
Weitere Merkmale und Vorteile der Erfindung sind Gegenstand der nachfolgenden Beschreibung und der zeichnerischen Darstellung bevorzugter Ausführungsbeispiele.
In den Zeichnungen zeigen:
- Fig. 1: einen Querschnitt einer Ausführungsform einer Profilleiste;
- Fig. 2: einen Querschnitt einer Ausführungsform einer Baugruppe, welche eine Profilleiste gemäß Fig. 1 und eine Windschutzscheibe umfasst;
- Fig. 3: einen Querschnitt einer Ausführungsform einer Profilleistenanordnung, welche die Baugruppe gemäß Fig. 2 und eine Wasserkastenabdeckung umfasst;
- Fig. 4: einen Querschnitt einer weiteren Ausführungsform einer Profilleiste;
- Fig. 5: einen Querschnitt einer Ausführungsform einer Baugruppe, welche eine Profilleiste gemäß Fig. 4 und eine Windschutzscheibe umfasst;
- Fig. 6: einen Querschnitt einer Ausführungsform einer Profilleistenanordnung, welche die Baugruppe gemäß Fig. 5 und eine Wasserkastenabdeckung umfasst; und
- Fig. 7 bis 11: jeweils einen Querschnitt einer weiteren Ausführungsform einer Profilleiste.

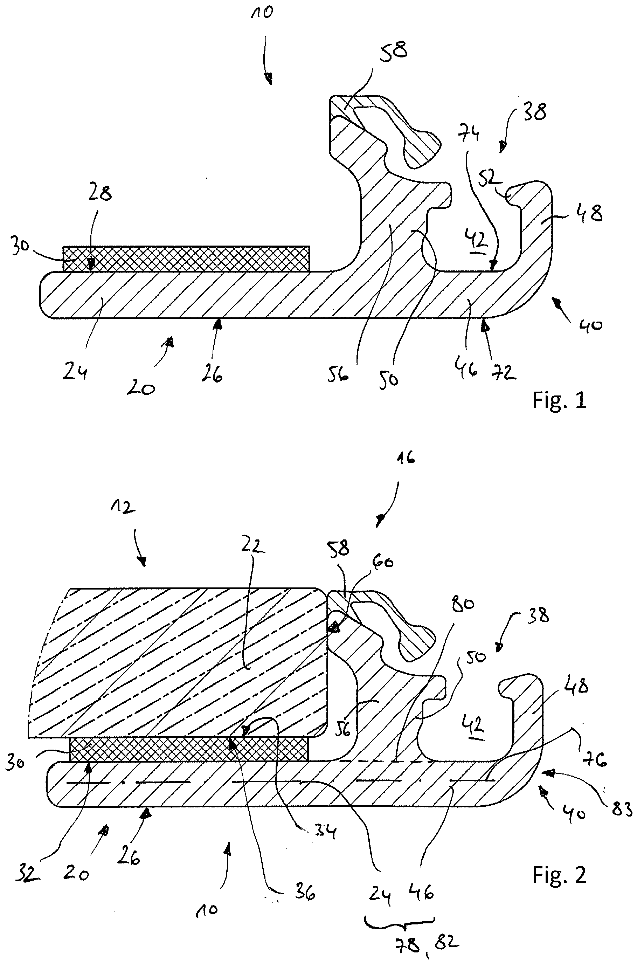

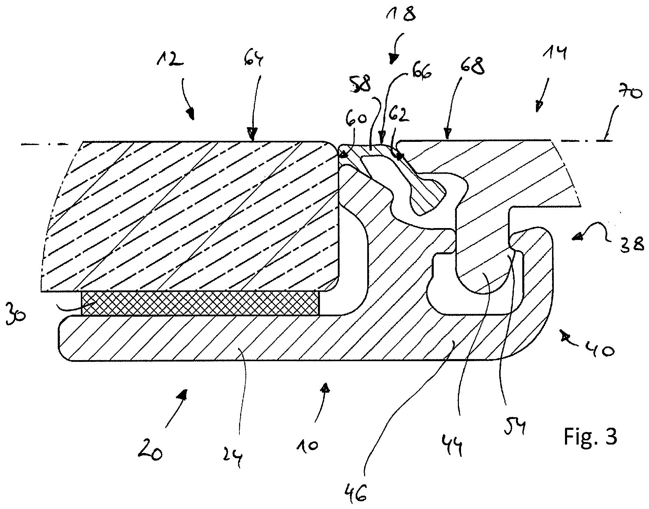

Unter Bezugnahme auf Figuren 1 bis 3 werden in der Zeichnung eine Profilleiste insgesamt mit dem Bezugszeichen 10, eine Windschutzscheibe mit dem Bezugszeichen 12 und eine Wasserkastenabdeckung mit dem Bezugszeichen 14 bezeichnet. Die Profilleiste 10 und die Windschutzscheibe 12 bilden gemeinsam eine Baugruppe 16. Die Baugruppe 16 bildet gemeinsam mit der Wasserkastenabdeckung 14 eine Profilleistenanordnung 18 (vgl. Figur 3).

Die Profilleiste 10 weist einen ersten Verbindungsbereich 20 zur Verbindung mit einem Randbereich 22 der Windschutzscheibe 12 auf. Der erste Verbindungsbereich 20 umfasst einen Verbindungsabschnitt 24 mit einer Unterseite 26 und einer Oberseite 28. An der Oberseite 28 des Verbindungsabschnitts ist eine Klebeschicht 30 angeordnet, die mit einer Unterseite 32 mit der Oberseite 28 des Verbindungsabschnitts 24 und mit einer Oberseite 34 mit einer Innenseite 36 der Windschutzscheibe verklebt ist.

Die Profilleiste 10 weist einen zweiten Verbindungsbereich 38 zur Verbindung mit der Wasserkastenabdeckung 14 auf. Der zweite Verbindungsbereich 38 weist einen U-förmigen Materialabschnitt 40 auf, der einen nutförmigen Aufnahmebereich 42 begrenzt, der zur verrastenden Aufnahme eines Rastabschnitts 44 der Wasserkastenabdeckung 14 dient (vgl. Figur 3).

Der U-förmige Materialabschnitt 40 weist einen Bodenabschnitt 46 sowie einen äußeren Schenkel 48 und einen inneren Schenkel 50 auf. An zumindest einem der Schenkel 48, 50 ist ein Rastelement 52 vorgesehen, das zur Verrastung mit einem Rastvorsprung 54 des Rastabschnitts 44 der Wasserkastenabdeckung 14 dient.

Der innere Schenkel 50 wird durch einen zentralen Abschnitt 56 gebildet, der im Querschnitt dicker ist als der äußere Schenkel 48.

Der zentrale Abschnitt 56 trägt ein Dichtelement 58. Dieses dient zur außenseitigen Abdichtung zwischen zueinander benachbarten Berandungen 60 bzw. 62 der Windschutzscheibe 12 bzw. der Wasserkastenabdeckung 14, vgl. Figur 3.

Eine Außenseite 64 der Windschutzscheibe 12, eine Außenseite 66 des Dichtelements 58 und eine Außenseite 68 der Wasserkastenabdeckung 14 sind gemeinsam miteinander bündig und bilden gemeinsam eine durchgängige Außenhaut 70 eines Kraftfahrzeugs.

Der Bodenabschnitt 46 weist eine Unterseite 72 auf, ferner eine Oberseite 74, welche Teil der Begrenzung des nutförmigen Aufnahmebereichs 42 ist.

Der Verbindungsabschnitt 24 des ersten Verbindungsbereichs 20 und der Bodenabschnitt 46 des U-förmigen Materialabschnitts 40 bilden gemeinsam einen durchgängigen, sich in einer geraden Ebene 76 erstreckenden Basisabschnitt 78, vgl. Figur 2.

Ein Übergang zwischen dem Basisabschnitt 78 und dem zentralen Abschnitt 56 ist in Figur 2 mit einer gestrichelten Linie 80 dargestellt. Von dem Basisabschnitt 78 ragen der zentrale Abschnitt 56 bzw. der innere Schenkel 50 und der äußere Schenkel 48 ab, in Richtung auf die Außenhaut 70 (vgl. Figur 3).

Der Basisabschnitt 78 ist in Form eines Flachkörperabschnitts 82 ausgebildet. Entlang der Ebene 76 gesehen (also im Querschnitt der Profilleiste 10) ist eine senkrecht zu der Außenhaut 70 gemessene Dicke des Flachkörperabschnitts konstant und beträgt beispielsweise zwischen ungefähr einem Millimeter und ungefähr fünf Millimeter.

Nach Herstellung einer Profilleiste 10 gemäß Figur 1 wird diese mittels der Klebeschicht 30 mit der Windschutzscheibe 12 verbunden. Es entsteht die Baugruppe gemäß Figur 2. Bei einem Transport dieser Baugruppe 16 ist es aus Platzgründen bevorzugt, die Windschutzscheibe 12 hochkant, also stehend, anzuordnen, also in einer gegenüber der Darstellung in Figur 2 um ca. 90° im Uhrzeigersinn verdrehten Lage.

Die Profilleiste 10 dient während des Transports zum Schutz des Randbereichs 22 der Windschutzscheibe 12. Dabei lastet das Gewicht der Windschutzscheibe 12 auf einem stirnseitigen Abschnitt 83 des Basisabschnitts 78. Die von der Aufstellfläche in den stirnseitigen Abschnitt 83 eingeleitete Kraft wird längs der Erstreckung der Ebene 76 in den Basisabschnitt 78 eingeleitet und von diesem aus über den zentralen Abschnitt 56 in die Berandung 60 der Windschutzscheibe 12 und über die Klebeschicht 30 und die Innenseite 36 ebenfalls in die Windschutzscheibe 12 eingeleitet.

Der durchgängige Basisabschnitt 78 schafft eine knickstabile Anordnung, die es ermöglicht, während des Transports der Baugruppe 16 auf einen innerhalb des nutförmigen Aufnahmebereichs 42 angeordneten Keder verzichten zu können.

Nach Anlieferung der Baugruppe 16 bei einem Kraftfahrzeughersteller kann die Baugruppe 16 mit der Karosserie eines herzustellenden Kraftfahrzeugs verbunden werden, indem die Windschutzscheibe 12 mit einem Scheibenrahmen des Kraftfahrzeugs verklebt wird. Anschließend entfällt der sonst übliche Montageschritt des Entfernens einer Kederleiste aus dem Aufnahmebereich 42; vielmehr kann unmittelbar mit der Montage der Wasserkastenabdeckung 14 begonnen werden, indem der Rastabschnitt 44 in den Aufnahmebereich 42 eingeführt und dort verrastet wird. Es entsteht eine oberflächenbündige Anordnung gemäß Figur 3.

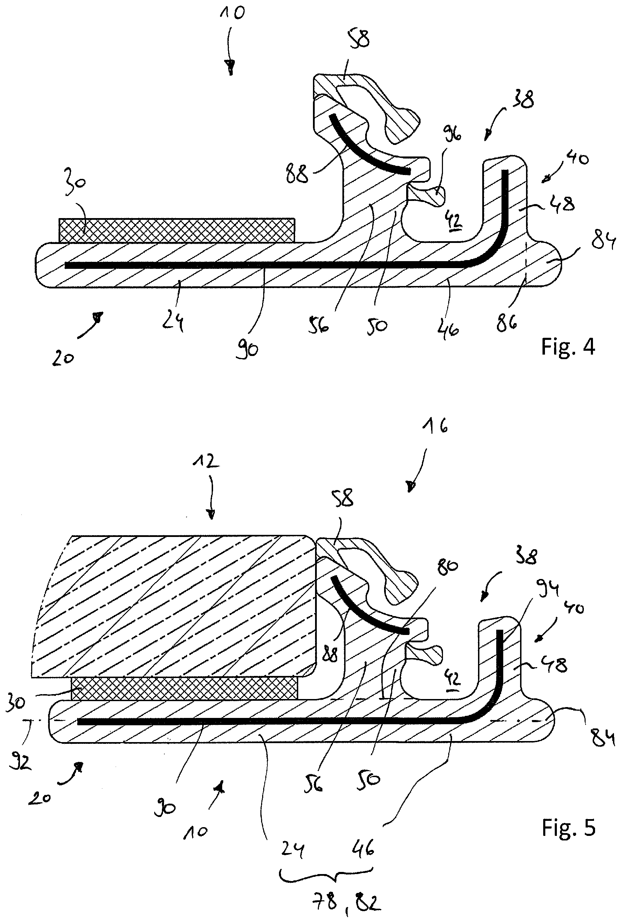

Die in Figuren 4 bis 7 dargestellten Ausführungsformen weisen im Vergleich zu den vorstehend beschriebenen Ausführungsformen gemäß Figuren 1 bis 3 weitere, vorteilhafte Merkmale auf. Es wird auf die vorstehende Beschreibung Bezug genommen. Nachfolgend werden lediglich zusätzliche Merkmale und Unterschiede der Ausführungsformen gemäß Figuren 4 bis 7 im Vergleich zu den Ausführungsformen gemäß Figuren 1 bis 3 erläutert. Jedes der nachstehend beschriebenen Zusatzmerkmale "1" bis "4" kann im Rahmen der vorliegenden Erfindung mit einer Ausführungsform gemäß Figuren 1 bis 3 kombiniert werden.

### Zusatzmerkmal "1"

Der Basisabschnitt 78 der Profilleiste 10 gemäß Figuren 4 bis 6 weist einen benachbart zu dem äußeren Schenkel 48 angeordneten Materialvorsprung 84 auf. Der Materialvorsprung 84 ist im Querschnitt noppenförmig und erstreckt sich ausgehend von einer in Figur 4 mit einer gestrichelten Linie 86 verdeutlichten Berandung des äußeren Schenkels 48 nach außen. Der Materialvorsprung 84 ist auf Höhe des Basisabschnitts 78 angeordnet und integraler Bestandteil des Basisabschnitts 78.

Der Materialvorsprung 84 ermöglicht eine im Vergleich zu den Ausführungsformen gemäß Figuren 1 bis 3 weiter verbesserte Abstützung einer Baugruppe 16 bei einer Hochkantanordnung der Baugruppe 16.

### Zusatzmerkmal "2"

Die Ausführungsformen gemäß Figuren 4 bis 7 umfassen ferner Versteifungseinlagen 88, 90, welche sich in Längserstreckung der Profilleiste 10 erstrecken und insbesondere aus einem metallischen Material hergestellt sind. Beispielsweise ist eine Versteifungseinlage 88 zur Versteifung eines in Einbaulage oberen Bereichs des zentralen Abschnitts 56 vorgesehen.

Insbesondere ist eine Versteifungseinlage 90 vorgesehen, welche den Basisabschnitt 78 versteift. Die Versteifungseinlage 90 erstreckt sich mit einem ersten Teilabschnitt entlang einer geraden Ebene 92 und versteift somit mit einem ersten Bereich den Verbindungsabschnitt 24 und mit einem zweiten Bereich den Bodenabschnitt 46.

Es ist möglich, dass sich die Versteifungseinlage 90 entlang der Ebene 92 bis in den Materialvorsprung 84 hinein erstreckt.

In der Zeichnung dargestellt ist eine Konfiguration, in welcher die Versteifungseinlage 90 einen Teilabschnitt 94 aufweist, der den äußeren Schenkel 48 des Materialabschnitts 40 versteift.

### Zusatzmerkmal "3"

Eine weitere Besonderheit der Ausführungsformen gemäß Figuren 4 bis 6 besteht darin, dass die dem nutförmigen Aufnahmebereich 42 zugewandte Seite des äußeren Schenkels 48 hinterschnittfrei ist.

### Zusatzmerkmal "4"

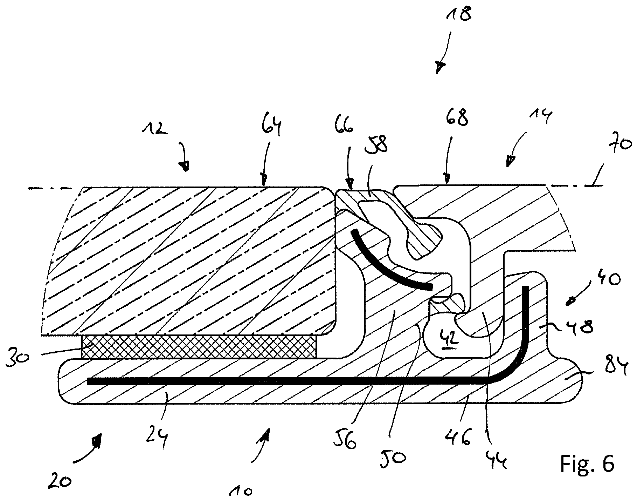

Der innere Schenkel 50 dient zur Anordnung eines Rastelements 96, das in Form eines Widerhakens in den nutförmigen Aufnahmebereich 42 hineinragt, um dort mit dem Rastabschnitt 44 der Wasserkastenabdeckung 14 verrastet zu werden (vgl. Figur 6).

Das Rastelement 96 ist vorzugsweise bezogen auf das Material der Profilleiste 10, also das Material des Basisabschnitts 78, des zentralen Abschnitts 56 und der Schenkel 48, 50 sowie des Materialvorsprungs 84, aus einem weicheren, elastisch nachgiebigeren Material hergestellt.

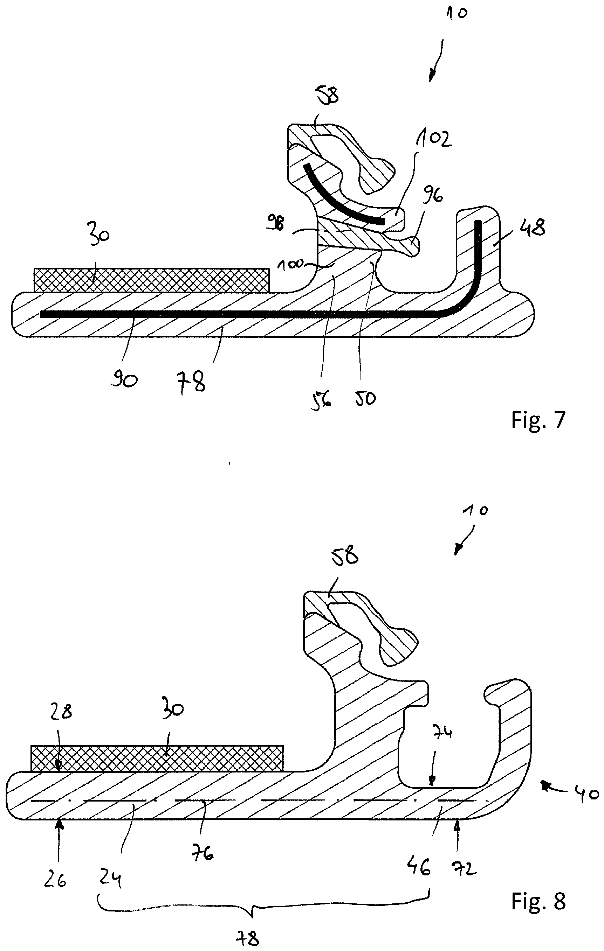

In Abwandlung der Profilleiste 10 gemäß Figuren 4 bis 6 ist es möglich, dass das Rastelement 96 durch einen Fortsatz einer Weichmaterialschicht 98 gebildet ist, welche den zentralen Abschnitt 56 in einen bodenseitigen Materialabschnitt 100 und einen dichtelementseitigen Materialabschnitt 102 unterteilt, vgl. Figur 7.

Ausgehend von den Ausführungsformen gemäß Figuren 1 bis 3 oder 4 bis 7 sind weitere Abwandlungen möglich. Beispielsweise ist es möglich, dass der Bodenabschnitt 46 des Materialabschnitts 40 eine geringere Dicke aufweist als der Verbindungsabschnitt 24. Dies kann beispielsweise dadurch realisiert werden, dass die Unterseiten 26 und 72 des Verbindungsabschnitts 24 bzw. des Bodenabschnitts 46 innerhalb einer gemeinsamen geraden Ebene angeordnet sind und somit stufenlos ineinander übergehen, während die Oberseite 28 des Verbindungsabschnitts 24 und die Oberseite 74 des Bodenabschnitts 46 relativ zueinander versetzt sind, beispielsweise sodass der Bodenabschnitt 46 eine geringere Dicke aufweist als der Verbindungsabschnitt 24, vgl. Figur 8.

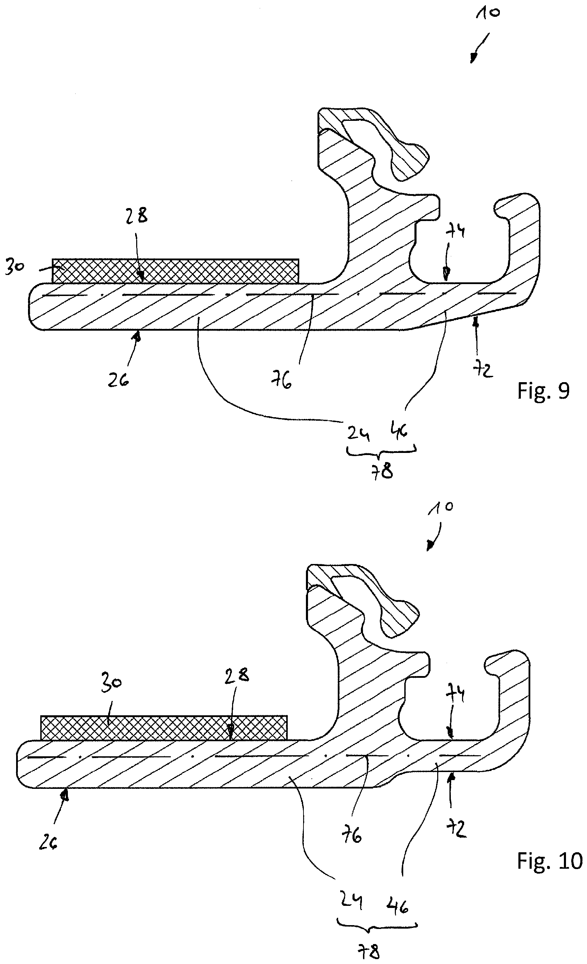

Wie in den Figuren 9 und 10 verdeutlicht, ist es auch möglich, dass beispielsweise die Oberseiten 28 und 74 des Verbindungsabschnitts 24 und des Bodenabschnitts 46 auf identischer Höhe angeordnet sind und die Unterseiten 26 und 72 relativ zueinander geneigt sind (vgl. Figur 9) oder zueinander gestuft sind (vgl. Figur 10).

Die vorstehend unter Bezugnahme auf Figuren 8 bis 10 beschriebenen Abwandlungen haben zur Folge, dass die Ebene 76, entlang welcher sich der Basisabschnitt 78 erstreckt, bezogen auf den Verbindungsabschnitt 24 und bezogen auf eine zentrale Materialschicht weiter in Richtung Unterseite 26 (vgl. Figur 8) oder weiter in Richtung Oberseite 28 (vgl. Figuren 9 und 10) versetzt angeordnet ist.

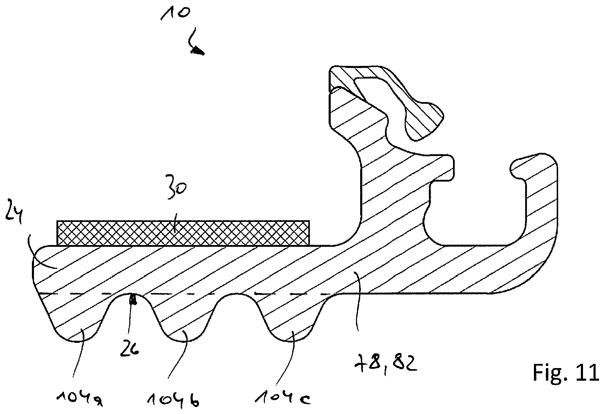

In Figur 11 ist eine weitere Abwandlung einer Profilleiste 10 dargestellt. Ausgehend von dem als Flachkörperabschnitt 82 ausgebildeten Basisabschnitt 78 weist die Unterseite 26 des Verbindungsabschnitts 24 mindestens eine Materialerweiterung 104a, 104b, 104c auf. Diese kann zur Abstützung auf einer Traverse einer Kraftfahrzeugkarosserie dienen.

## Patentansprüche

1. Profilleistenanordnung (18), umfassend eine Profilleiste (10) mit einem ersten Verbindungsbereich (20) zur Verbindung mit einem Randbereich (22) einer Windschutzscheibe (12) eines Kraftfahrzeugs und mit einem zweiten Verbindungsbereich (38) zur Verbindung mit einer an die Windschutzscheibe (12) angrenzenden Wasserkastenabdeckung (14), wobei der erste Verbindungsbereich (20) einen Verbindungsabschnitt (24) zur Verbindung mit einer Innenseite (36) der Windschutzscheibe (12) aufweist und wobei der zweite Verbindungsbereich (38) einen V- oder U-förmigen Materialabschnitt (40) zur Begrenzung eines nutförmigen Aufnahmebereichs (42) aufweist, wobei der Aufnahmebereich (42) zur verrastenden Aufnahme eines Rastabschnitts (44) der Wasserkastenabdeckung (14) ausgebildet ist, wobei die Außenseiten (64, 66, 68) der Wasserkastenabdeckung (14), der Profilleiste (10) und der Windschutzscheibe (12) miteinander bündig sind, wobei im Querschnitt der Profilleiste (10) gesehen zumindest eine Teilschicht des Verbindungsabschnitts (24), die parallel zu einer der Windschutzscheibe (12) zugewandten Oberseite (28) des Verbindungsabschnitts (24) orientiert ist, und zumindest eine Teilschicht eines Bodenabschnitts (46) des V- oder U-förmigen Materialabschnitts (40) gemeinsam einen durchgängigen, sich in einer Ebene (76) erstreckenden Basisabschnitt (78) der Profilleiste (10) bilden, von welchem die beiden Schenkel (48, 50) des V- oder U-förmigen Materialabschnitts (40) abragen, **dadurch gekennzeichnet, dass** die Profilleiste (10) einen als Abstützkörper wirksamen Materialvorsprung (84) aufweist, der benachbart zu einem Schenkel (48) des V- oder U-förmigen Materialabschnitts (40) angeordnet ist, der bezogen auf den Bodenabschnitt (46) auf der dem Verbindungsabschnitt (24) abgewandten Seite angeordnet ist, wobei der Materialvorsprung (84) auf Höhe des Basisabschnitts (78) angeordnet ist, sodass - bei Anordnung der Profilleiste (10) an einer Windschutzscheibe (12) und Hochkantanordnung der Windschutzscheibe (12) - eine durch das Gewicht der Windschutzscheibe (12) bedingte Aufstandskraft in den Materialvorsprung (84) und von dort umwegfrei und unmittelbar in den Basisabschnitt (78) einleitbar ist.

2. Profilleistenanordnung (18) nach Anspruch 1, **dadurch gekennzeichnet, dass** sich der Basisabschnitt (78) in einer geraden Ebene (76) erstreckt.

3. Profilleistenanordnung (18) nach einem der voranstehenden Ansprüche, **dadurch gekennzeichnet, dass** der Verbindungsabschnitt (24) und der Bodenabschnitt (46) an ihrer jeweiligen Unterseite (26, 72) und/oder ihrer jeweiligen Oberseite (28, 74) stufenlos ineinander übergehen.

4. Profilleistenanordnung (18) nach einem der voranstehenden Ansprüche, **dadurch gekennzeichnet, dass** der Basisabschnitt (78) ein Flachkörperabschnitt (82) ist.

5. Profilleistenanordnung (18) nach einem der voranstehenden Ansprüche, **dadurch gekennzeichnet, dass** die Profilleiste (10) längs ihrer Erstreckung mit mindestens einer Versteifungseinlage (88, 90) versteift ist.

6. Profilleistenanordnung (18) nach Anspruch 5, **dadurch gekennzeichnet, dass** sich die mindestens eine Versteifungseinlage (90) im Querschnitt der Profilleiste (10) gesehen zumindest mit einem Teilabschnitt innerhalb einer vorzugsweise geraden Ebene (92) erstreckt, wobei ein erster Bereich des Teilabschnitts zumindest abschnittsweise in dem Verbindungsabschnitt (24) angeordnet ist und ein zweiter Bereich desselben Teilabschnitts in dem Bodenabschnitt (46) angeordnet ist.

7. Profilleistenanordnung (18) nach Anspruch 5 oder 6, **dadurch gekennzeichnet, dass** die Versteifungseinlage (90) mindestens einen Teilabschnitt (94) zur Versteifung eines Schenkels (48, 50) des V- oder U-förmigen Materialabschnitts (40) aufweist.

8. Profilleistenanordnung (18) nach einem der voranstehenden Ansprüche, **dadurch gekennzeichnet, dass** der Materialvorsprung (84) einen noppenförmigen Querschnitt aufweist.

9. Profilleistenanordnung (18) nach einem der voranstehenden Ansprüche, **dadurch gekennzeichnet, dass** der Materialvorsprung (84) und der Basisabschnitt (78) aus demselben Material bestehen.

10. Profilleistenanordnung (18) nach einem der voranstehenden Ansprüche, **dadurch gekennzeichnet, dass** der Materialvorsprung (84) mittels mindestens einer Versteifungseinlage der Profilleiste (10) versteift ist.

11. Profilleistenanordnung (18) nach einem der voranstehenden Ansprüche, **dadurch gekennzeichnet, dass** die Profilleiste (10) einen zentralen Abschnitt (56) aufweist, der an einen Schenkel (50) des V- oder U-förmigen Materialabschnitts (40) angrenzt oder diesen ausbildet und im Einbauzustand zu einer Berandung (60) der Windschutzscheibe (12) näher benachbart ist als der andere, äußere Schenkel (48) des V- oder U-förmigen Materialabschnitts (40), wobei der zentrale Abschnitt (56) von dem Basisabschnitt (78) abragt.

12. Profilleistenanordnung (18) nach Anspruch 11, **dadurch gekennzeichnet, dass** der zentrale Abschnitt (56) im Querschnitt dicker ist als der äußere Schenkel (48) des V- oder U-förmigen Materialabschnitts (40).

13. Profilleistenanordnung (18) nach Anspruch 11 oder 12, **dadurch gekennzeichnet, dass** der zentrale Abschnitt (56) ein Dichtelement (58) zur außenseitigen Abdichtung zwischen zueinander benachbarten Berandungen (60, 62) der Windschutzscheibe (12) und der Wasserkastenabdeckung (14) trägt.

14. Profilleistenanordnung (18) nach einem der Ansprüche 11 bis 13, **dadurch gekennzeichnet, dass** der zentrale Abschnitt (56) und/oder der äußere Schenkel (48) des V- oder U-förmigen Materialabschnitts (40) ein Rastelement (96) aufweist, das in den Aufnahmebereich (42) hineinragt und zur Verrastung mit dem Rastabschnitt (44) der Wasserkastenabdeckung (14) dient.

15. Profilleistenanordnung (18) nach Anspruch 14, **dadurch gekennzeichnet, dass** das Rastelement (96) durch einen Fortsatz einer Weichmaterialschicht (98) gebildet ist, die den zentralen Abschnitt (56) in einen bodenseitigen Materialabschnitt (100) und einen dichtelementseitigen Materialabschnitt (102) unterteilt.

## Claims

1. A profile strip arrangement (18) comprising a profile strip (10) having a first connecting area (20) that serves to establish a connection to an edge area (22) of a windshield (12) of a motor vehicle and having a second connecting area (38) that serves to establish a connection to a windshield cowl cover (14) situated adjacent to the windshield (12), whereby the first connecting area (20) has a connecting section (24) that serves to establish a connection to an inside (36) of the windshield (12) and whereby the second connecting area (38) has a U-shaped or V-shaped material section (40) to delimit a groove-shaped receiving area (42), whereby the receiving area (42) is configured to receive a latching section (44) of the windshield cowl cover (14) so as to latch it, whereby the outside (64) of the windshield cowl cover (14), the outside (66) of the profile strip (10) and the outside (68) of the windshield (12) are flush with each other, whereby, as seen in the cross section of the profile strip (10), at least a partial layer of the connecting section (24), which is oriented in parallel to a top (28) of the connecting section (24) facing the windshield (12), and at least a partial layer of a bottom section (46) of the U-shaped or V-shaped material section (40) together form a continuous base section (78) of the profile strip (10) which extends in one plane (76) and from which the two legs (48, 50) of the U-shaped or V-shaped material section (40) project, **characterized in that** the profile strip (10) has a material projection (84) that functions as a support element and that is arranged adjacent to a leg (48) of the U-shaped or V-shaped material section (40) that - relative to the bottom section (46) - is arranged on the side facing away from the connecting section (24), whereby the material projection (84) is arranged at the level of the base section (78), such that - when the profile strip (10) is arranged at the windshield (12) and when the windshield (12) is arranged upright - a contact force induced by the weight of the windshield (12) can be introduced into the material projection (84) and from there into the base section (78) in a direct manner and without any diversion.

2. The profile strip arrangement (18) according to claim 1, **characterized in that** the base section (78) extends in a straight plane (76).

3. The profile strip arrangement (18) according to one of the preceding claims, **characterized in that** the connecting section (24) and the bottom section (46) make a stepless transition into each other at their respective bottoms (26, 72) and/or at their respective tops (28, 74).

4. The profile strip arrangement (18) according to one of the preceding claims, **characterized in that** the base section (78) is a flat element section (82).

5. The profile strip arrangement (18) according to one of the preceding claims, **characterized in that** the profile strip (10) is reinforced along its extension by means of at least one reinforcement insert (88, 90).

6. The profile strip arrangement (18) according to claim 5, **characterized in that** at least one partial section of the at least one reinforcement insert (90) extends in a preferably straight plane (92) as seen in the cross section of the profile strip (10), whereby a first area of the partial section is at least partially arranged in the connecting section (24) and a second area of the same partial section is arranged in the bottom section (46).

7. The profile strip arrangement (18) according to claim 5 or 6, **characterized in that** the reinforcement insert (90) has at least one partial section (94) to reinforce a leg (48, 50) of the U-shaped or V-shaped material section (40).

8. The profile strip arrangement (18) according to one of the preceding claims, **characterized in that** the material projection (84) has a nub-like cross section.

9. The profile strip arrangement (18) according to one of the preceding claims, **characterized in that** the material projection (84) and the base section (78) are made of the same material.

10. The profile strip arrangement (18) according to one of the preceding claims, **characterized in that** the material projection (84) is reinforced by means of at least one reinforcement insert of the profile strip (10).

11. The profile strip arrangement (18) according to one of the preceding claims, **characterized in that** the profile strip (10) has a central section (56) that is adjacent to, or that forms, a leg (50) of the U-shaped or V-shaped material section (40) and that, after installation, more closely adjoins a rim (60) of the windshield (12) than the other, outer leg (48) of the U-shaped or V-shaped material section (40) does, whereby the central section (56) projects from the base section (78).

12. The profile strip arrangement (18) according to claim 11, **characterized in that** the cross section of the central section (56) is thicker than the outer leg (48) of the U-shaped or V-shaped material section (40).

13. The profile strip arrangement (18) according to claim 11 or 12, **characterized in that** the central section (56) has a sealing element (58) to create an external seal between adjacent rims (60, 62) of the windshield (12) and of the windshield cowl cover (14).

14. The profile strip arrangement (18) according to one of claims 11 to 13, **characterized in that** the central section (56) and/or the outer leg (48) of the U-shaped or V-shaped material section (40) has a latching element (96) that protrudes into the receiving area (42) and that serves to be latched to the latching section (44) of the windshield cowl cover (14).

15. The profile strip arrangement (18) according to claim 14, **characterized in that** the latching element (96) is formed by a projection of a soft layer of material (98) that divides the central section (56) into a material section (100) facing the bottom and a material section (102) facing the sealing element.

## Revendications

1. Ensemble baguette profilée (18), comprenant une baguette profilée (10) avec une première zone de liaison (20) à relier à une zone de bord (22) d'un pare-brise (12) d'un véhicule automobile et avec une deuxième zone de liaison (38) à relier à un cache de caisson d'eau (14) adjacent au pare-brise (12), dans lequel la première zone de liaison (20) présente une section de liaison (24) à relier à une face intérieure (36) du pare-brise (12) et dans lequel la deuxième zone de liaison (38) présente une section de matériau en forme de V ou de U (40) pour la délimitation d'une zone de réception (42) en forme de rainure, dans lequel la zone de réception (42) est réalisée pour la réception par encliquetage d'une section d'encliquetage (44) du cache de caisson d'eau (14), dans lequel les faces extérieures (64, 66, 68) du cache de caisson d'eau (14), de la baguette profilée (10) et du pare-brise (12) sont à fleur les unes avec les autres, dans lequel, vu en coupe transversale de la baguette profilée (10), au moins une couche partielle de la section de liaison (24), qui est orientée parallèlement à une face supérieure (28), tournée vers le pare-brise (12), de la section de liaison (24), et au moins une couche partielle d'une section fond (46) de la section de matériau en forme de V ou de U (40) forment conjointement une section de base (78) continue, s'étendant dans un plan (76), de la baguette profilée (10), de laquelle les deux branches (48, 50) de la section de matériau en forme de V ou de U (40) font saillie, **caractérisé en ce que** la baguette profilée (10) présente une partie saillante de matériau (84) agissant en tant que corps d'appui, qui est disposée au voisinage d'une branche (48) de la section de matériau en forme de V ou de U (40), qui est disposée sur la face opposée à la section de liaison (24) par rapport à la section fond (46), dans lequel la partie saillante de matériau (84) est disposée à hauteur de la section de base (78), de sorte que - lorsque la baguette profilée (10) est disposée sur un pare-brise (12) et que le pare-brise (12) est disposé de chant - une force de contact due au poids du pare-brise (12) peut être appliquée dans la partie saillante de matériau (84) et de là sans détour et directement dans la section de base (78).

2. Ensemble baguette profilée (18) selon la revendication 1, **caractérisé en ce que** la section de base (78) s'étend dans un plan (76) rectiligne.

3. Ensemble baguette profilée (18) selon l'une quelconque des revendications précédentes, **caractérisé en ce que** la section de liaison (24) et la section fond (46) se prolongent l'une dans l'autre sans gradin sur leur face inférieure (26, 72) respective et/ou leur face supérieure (28, 74) respective.

4. Ensemble baguette profilée (18) selon l'une quelconque des revendications précédentes, **caractérisé en ce que** la section de base (78) est une section formant corps plat (82).

5. Ensemble baguette profilée (18) selon l'une quelconque des revendications précédentes, **caractérisé en ce que** la baguette profilée (10) est renforcée le long de son étendue avec au moins un insert de renforcement (88, 90).

6. Ensemble baguette profilée (18) selon la revendication 5, **caractérisé en ce que** l'au moins un insert de renforcement (90) s'étend vu en coupe transversale de la baguette profilée (10) au moins avec une section partielle à l'intérieur d'un plan (92) de préférence rectiligne, dans lequel une première zone de la section partielle est disposée au moins en partie dans la section de liaison (24) et une deuxième zone de la même section partielle est disposée dans la section fond (46).

7. Ensemble baguette profilée (18) selon la revendication 5 ou 6, **caractérisé en ce que** l'insert de renforcement (90) présente au moins une section partielle (94) pour le renforcement d'une branche (48, 50) de la section de matériau en forme de V ou de U (40) .

8. Ensemble baguette profilée (18) selon l'une quelconque des revendications précédentes, **caractérisé en ce que** la partie saillante de matériau (84) présente une section transversale en forme de picot.

9. Ensemble baguette profilée (18) selon l'une quelconque des revendications précédentes, **caractérisé en ce que** la partie saillante de matériau (84) et la section de base (78) sont constituées du même matériau.

10. Ensemble baguette profilée (18) selon l'une quelconque des revendications précédentes, **caractérisé en ce que** la partie saillante de matériau (84) est renforcée au moyen d'au moins un insert de renforcement de la baguette profilée (10).

11. Ensemble baguette profilée (18) selon l'une quelconque des revendications précédentes, **caractérisé en ce que** la baguette profilée (10) présente une section centrale (56), qui est adjacente à une branche (50) de la section de matériau en forme de V ou de U (40) ou réalise celle-ci et, dans l'état monté, est voisine d'une bordure (60) du pare-brise (12) de manière plus proche que l'autre branche extérieure (48) de la section de matériau en forme de V ou de U (40), dans lequel la section centrale (56) fait saillie de la section de base (78).

12. Ensemble baguette profilée (18) selon la revendication 11, **caractérisé en ce que** la section centrale (56) est plus épaisse dans la section transversale que la branche extérieure (48) de la section de matériau en forme de V ou de U (40).

13. Ensemble baguette profilée (18) selon la revendication 11 ou 12, **caractérisé en ce que** la section centrale (56) porte un élément d'étanchéité (58) pour l'étanchéité côté extérieur entre des bordures (60, 62) voisines l'une de l'autre du pare-brise (12) et du cache de caisson d'eau (14).

14. Ensemble baguette profilée (18) selon l'une quelconque des revendications 11 à 13, **caractérisé en ce que** la section centrale (56) et/ou la branche extérieure (48) de la section de matériau en forme de V ou de U (40) présentent un élément d'encliquetage (96), qui fait saillie à l'intérieur de la zone de réception (42) et sert à l'encliquetage avec la section d'encliquetage (44) du cache de caisson d'eau (14).

15. Ensemble baguette profilée (18) selon la revendication 14, **caractérisé en ce que** l'élément d'encliquetage (96) est formé par un prolongement d'une couche de matériau souple (98), qui subdivise la section centrale (56) en une section de matériau côté fond (100) et une section de matériau côté élément d'étanchéité (102).
